**Europäisches Patentamt**

**European Patent Office**

**Office européen des brevets**

(19)

(11) **EP 1 043 681 A1**

## (12) EUROPEAN PATENT APPLICATION

(43) Date of publication:
**11.10.2000  Bulletin 2000/41**

(51) Int Cl.7: **G06K 7/12**, G06K 19/14

(21) Application number: **99106855.2**

(22) Date of filing: **07.04.1999**

| | |
|---|---|
| (84) Designated Contracting States:<br>**AT BE CH CY DE DK ES FI FR GB GR IE IT LI LU MC NL PT SE**<br>Designated Extension States:<br>**AL LT LV MK RO SI**<br><br>(71) Applicant: **SICPA HOLDING S.A.**<br>**1008 Prilly (CH)** | (72) Inventor: **Müller, Edgar**<br>**1006 Lausanne (CH)**<br><br>(74) Representative: **Hepp, Dieter et al**<br>**Hepp, Wenger & Ryffel AG,**<br>**Friedtalweg 5**<br>**9500 Wil (CH)** |

(54)  **Method and device for exciting a luminescent material**

(57)  An eye-safe light source for the efficient excitation of anti-Stokes materials in up-converting mode comprises lasers operated in pulsed mode, with the pulses having a relatively high peak power(PP) while choosing pulse duration and pulse repetition frequency such as to yield a relatively small mean power (MP) of less than 5 mW, preferably less than 1 mW, more preferably equal or less than 0,5 mW.

Fig 1

EP 1 043 681 A1

## Description

The invention relates to a method for exciting a luminescent material, a method for authenticating a security element and to a detection device for exciting a luminescent material according to the independent patent claims.

Luminescents are materials which emit radiation of one or several specific wavelength(s) when excited with radiation of other specific wavelengths.

Up-converting, or anti-Stokes luminescents are materials which are able to convert radiation of a given wavelength (excitation radiation) into radiation of a shorter wavelength (emission radiation). The principle of up-conversion in such materials relies on their ability to add together the energies of two or more excitation photons, and to release the resulting cumulated energy as one single photon of higher energy, i.e. shorter wavelength.

For example, infrared radiation of 980 nm is converted into visible radiation of 550 nm by an up-converting material containing the rare-earth ions Er(3+) and Yb(3+), e.g. an $Y_2O_2S$:Er,Yb type phosphor.

Absorption of a first infrared photon in this kind of phosphor promotes an rare-earth ion into a relatively long-lived first excited state. If a second infrared photon encounters this excited ion during the lifetime of its excited state, the ion absorbs it and is promoted to a second, higher excited state. Transition of the ion from this second state towards the ground state results in the emission of a photon with higher energy, i.e. shorter wavelength.

Obviously, the intensity of the short wavelength emission of such a multi, e.g. two, photon excitation depends on the product of all involved, e.g. both, absorption probabilities. In the case of a two photon process, the excitation efficiency increases with the square of the excitation intensity, as far as saturation effects are not predominant, that means for low to moderate excitation levels. For a convenient visualization of up-converting effects in such rare-earth materials, light sources having a high intensity and monochromatic radiation are generally used, i.e. lasers with optical output powers in the range of 5 to 20 mW. Such lasers are classed 3B or 4, as they represent a severe eye hazard, especially in the infrared range, where the radiation is invisible to the human eye and no natural reflex is available to avoid exposure. Selling and handling of class 3 and 4 lasers is for this reason strongly restricted.

Luminescent materials, in particular up-converting materials, are frequently used in the field of authentication, especially in the field of security printing. Valuables, such as bank notes, shares or official documents, as well as branded goods, can be provided with an imprint or with a label comprising such luminescent material. To authenticate the valuables, the material is excited by a light source emitting at the appropriate wavelength, and the resulting luminescent response is detected. Authenticity is confirmed if the correct luminescent response is obtained.

Due to the intrinsic eye hazard associated to 3B or Class 4 lasers, printers of such authenticating elements, as well as authenticating authorities are reluctant to use such lasers. They would need a Class 1 compatible checking device for an easy control and authentication of security elements containing such luminescent materials. Continuous wave class 1 lasers which have a sufficiently low output power (below 1 mW) do not produce eye damage, and can therefore be sold and handled freely. However, a class 1 continuous wave laser is not sufficiently intense to produce an easily visible or detectable emission in the case of up-converting luminescents.

Visible means in this context that the emission can be seen by the unaided eye. The human eye is sensitive to radiation of 400 nm to 700 nm, with a maximum sensitivity at about 550 nm (green). The sensitivity of the eye is about 1 lm/m$^2$ for the color receptors, and 0.01 lm/m$^2$ for the white light receptors. Detectable means in this context that the emission can be detected with the help of an appropriate optoelectronic detecting device. Optoelectronic detection is possible down to the level of single-photon counting, that means about $10^{-14}$ lm/m$^2$.

DE-A-2547768 discloses the use of up-converting material for authentication purposes. The detecting equipment comprises a pulsed IR excitation source (IR light emitting diode), an IR blocking filter, a photodiode for detecting the visual luminescent emission, and an electronic circuit for the evaluation of intensity, rise and decay times of said emission, in order to correctly identify the luminescent material.

The detecting equipment of DE-A-2547768 is intrinsically a short-range device, operating in close contact with the sample. This operation mode is required by the relatively low excitation intensities achievable with LEDs, compared to what could be achieved with lasers. Direct visualization of the luminescent is hardly possible. The device requires also a relatively high amount of up-converting material to be present on the sample, in order to detect it correctly. In covered marking applications, however, one would wish to use the lowest possible amount of marking material, in order to make the marking less easily detectable (i.e. more resistant to counterfeit), as well as to keep raw material costs in reasonable limits.

It is therefore an object of the present invention to overcome the drawbacks of the prior art, especially to provide a method for exciting a luminescent material, in particular an up-converting material, a method for authenticating a security element, and a device for exciting such a luminescent material, which are efficient for the excitation of low amounts of luminescent materials, which are suitable for long range detection, which do not present eye hazard, and which are preferably laser class 1 compatible. The method and device are especially suited for the excitation of luminescents involving multi-photon processes.

These objects are solved with a method and a device according to the independent patent claims.

According to the present invention, a method for exciting a luminescent material, in particular an anti-Stokes material, involves the use of at least one pulsed laser having a peak power sufficient to induce a visible or detectable emission, typically of more than 1 W, preferably of about 10 W. The number of pulses per time unit and the pulse width are selected so as to keep the mean optical output power of the laser below the eye hazard threshold. Preferably, the pulse frequency and pulse width are selected so that the laser's mean power is equal or less than 5 mW, preferably equal or less than 1 mW and even more preferably less than 0,5 mW.

The laser has typically the following characteristics: Pulse duration of the laser is equal or less than 10 μs, preferably less than 1 μs and more preferably about 100 ns; pulse frequency is equal or less than 10 kHz, preferably equal or less than 1 kHz and even more preferably equal or less than 100 Hz; pulse height about 10 W.

The mean output power with a pulse duration of 100 ns, a pulse frequency of 1 kHz and a pulse height about 10 W is about 1 mW.

The invention relies on the fact that the luminescence yield especially in the case of up-converting materials increases with the excitation peak power, whereas the harmfulness of a laser beam is just given by its mean optical output power at a given wavelength. In the case of a two-photon process involving two photons of equal wavelength, the emission intensity increases with roughly the square of the excitation intensity (i.e. the pulse peak power). Thus, by concentrating an average laser power of 1 mW into a sequence of short and intense pulses, one considerably enhances the luminescent efficiency of the up-converting process, which in turn allows for visual or optoelectronic detection of smaller quantities of luminescent, using eye-safe conditions.

The method according to the present invention can involve a laser emitting at a certain wavelength preferably of about 980 nm, for exciting an anti-Stokes material comprising erbium, or erbium and ytterbium, or thulium or other rare-earth ions in combination with ytterbium, e.g. $La_2O_3$:Er; $Y_2O_2S$:Er,Yb, $GdF_3$:Er,Yb, $Y_2O_2S$:Tm,Yb.

For authentication purposes, a preferred embodiment comprises a laser for carrying out the method according to the invention, incorporated into a portable detecting device.

The detecting device may further comprise optical elements for directing and focalizing the laser beam onto the luminescent material, or, in its case, for producing a parallel beam.

A focussed beam is preferable for testing samples at a given, fixed distance. A parallel beam is preferable for authentication over longer and varying distances.

The method for authenticating a security element according to the present invention comprises the steps of exciting a luminescent material as described above, and detecting the emitted luminescent response.

In a special embodiment of the present invention the security element is a security print having incorporated anti-Stokes material.

The detection may be performed visually. The high up-conversion yields which are obtained during the excitation peaks allow for a visualization of such luminescents using a laser mean optical output power of 1 mW or less.

Alternatively, the emitted light may be detected optoelectronically. Furthermore, combinations of visual and optoelectronic detection are conceivable as well.

In the case of optoelectronic detection, the luminescent material needs not to be excited with a continuous train of laser pulses; in principle, a response can be detected to one single excitation pulse. This is possible because the electronics is rapid enough to follow the luminescent emission at the microsecond time scale and below. The human eye's inertia impedes a visual following of events which are faster than a tenth of a second. An optoelectronic detection device can thus be engineered such as to operate in an entirely masked manner, even with conventional luminescents which per se would have a good visible response. This increases the security potential of the method according to the present invention.

The method according to the present invention is therefore advantageous even for the detection of conventional, Stokes type down-converting luminescent materials, i.e. such, where the emission wavelength is longer than the excitation wavelength.

The material's luminescent response to a short and intense excitation flash of 10 W optical power is comparably intense. In fact, this kind of excitation is able to produce a luminescent emission signal whose intensity is far above the spectral intensity of the ambient light, and therefore permits its detection with a favorable signal-to-noise (S/N) ratio even in environments which are not completely obscure. If a single laser shot does not yield a sufficiently good S/N ratio, the measurement can be repeated a small number of times (e.g. 5 to 10 times), and the individual results combined (integrated). It is known to those skilled in the art that under such conditions the signal increases linearly with the number of measurements, whereas the noise increases only with the square root of the number of measurements. A neat enhancement of the S/N ratio is therefore obtained if the measurement is repeated several times.

In a further embodiment of the present invention, the method comprises excitation of the luminescent material, in particular of the anti-Stokes material, as well as the detection of the resulting emission over a certain distance, preferably over a distance of more than one meter (remote authentication).

In the embodiment comprising an optoelectronic detection system, the rise and decay characteristics of the luminescent emission can also be measured. Rise and/or decay characteristics of a luminescent emission can be used as additional authentication elements.

When an optoelectronic arrangement is used for automatic detection of the luminescent emission, said arrangement may be included in a compact detecting device together with the light source according to the present invention. Such a compact device can be used to excite the luminescent material and to detect the resulting emission in a single authenticating operation.

The detecting arrangement may be provided with convenient optics for collecting the emitted light and for directing it towards a photo detector.

The optics may further include filters which only transmit light having a predetermined wavelength or wavelength range. In particular, the detecting device may be laid out to respond only to light in a very narrow wavelength range.

The detecting arrangement may further be adapted for the measurement of the rise and/or decay characteristics of the luminescent emission. Emission rise and decay times are additional material characteristics, which can serve as criteria for authenticating a luminescent security element.

The detection device may also be provided with a visual display and/or acoustical means for indicating authenticity of the security device. The display, e. g. a LED, is activated in the case of correct emission and/or decay characteristics being detected, corresponding to those of the luminescent material in question.

The pulsed excitation is as well of advantage in overcoming the influence of background radiation, i. e. daylight, overlapping the luminescent emission of the material.

A further advantage is achieved if the emission of the laser pulse and the activity of the detecting device are synchronized, e.g. using a phase locked detection loop. The frequency dependency of the luminescent response can additionally be used as an indirect means to access the decay characteristics of said emission, providing a simple way of discriminating different materials.

The invention will now be explained with reference to the drawing and to an arbitrary embodiment. In the drawing,

Figure 1      shows a schematic view of a method for exciting a luminescent material using a pulsed laser device according to the present invention.

Figure 2      shows a schematic view of a pulse train, used to excite a luminescent material according to the present invention.

Figure 3      shows a schematic representation of a detecting device according to the present invention.

Figure 4      shows a schematic representation of an alternative embodiment of a detecting device according to the present invention.

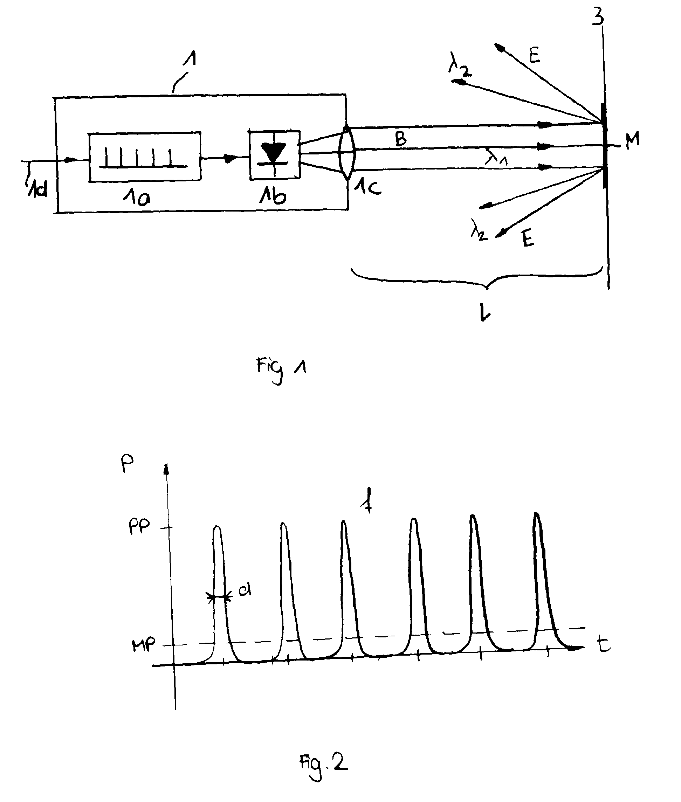

Figure 1 shows a light source according to the present invention. The laser 1 comprises a pulse generator 1a, a pulse laser diode 1b, optional optics 1 c, and a power supply 1d commanding the laser action. Pulse repetition frequency, pulse width and pulse height of the laser radiation are chosen such as to comply with Class 1 standards according to the European Standard EN 60825-1:1994.

The pulsed laser 1 directs a laser beam B towards a security element 3 which is provided with an anti-Stokes material M. Following the excitation with a laser beam of wavelength $\lambda_1$, an emission of wavelength $\lambda_2$ is produced in the anti-Stokes material, whereby $\lambda_2$ is shorter than $\lambda_1$.

The laser 1 can be used over a distance L depending on the actual settings of the optics 1c. In fact, the laser beam B may be chosen focalized or parallel, according to the requirements of the application.

Figure 2 represents the output power of laser 1 in function of time t. The laser is operated in pulsed mode, and a corresponding pulse train is shown. The pulses have a maximum peak power PP, a pulse duration d, and a pulse repetition frequency f. The pulse duration d is hereby defined as the width of the pulse at half height.

The mean power MP of the pulse laser corresponds to the integrated laser power P over a specific lapse of time, divided by the lapse of time. For approximately rectangular pulse shape, it can be expressed by the product:

$$MP = PP \cdot d \cdot f$$

As seen in figure 2, the mean power of the laser can be very much lower than its peak power. This is a consequence of a short pulse duration and a low pulse repetition frequency. The mean power MP can thus be chosen sufficiently small to avoid eye hazard. At the same time, the peak power can be chosen sufficiently high, in order to produce up-conversion with an appropriate efficiency.

In a specific embodiment, the laser parameters and material characteristics were chosen as follows:

| | |
|---|---|
| Mean power (MP) | 1 mW |
| Peak power (PP) | 10 W |
| Pulse duration (d) | 100 ns |
| Pulse frequency (f) | 1 kHz |

(continued)

| | |
|---|---|
| Excitation wavelength ($\lambda_1$) | 980 nm |
| Anti-Stokes material (M) | $Y_2O_2S:Er,Yb$ |
| Emission wavelength ($\lambda_2$) | 550 nm |
| Laser type | diode laser |

It is obvious to those skilled in the art that other lasers and other types of luminescent materials, in particular such having other excitation wavelengths, can be used.

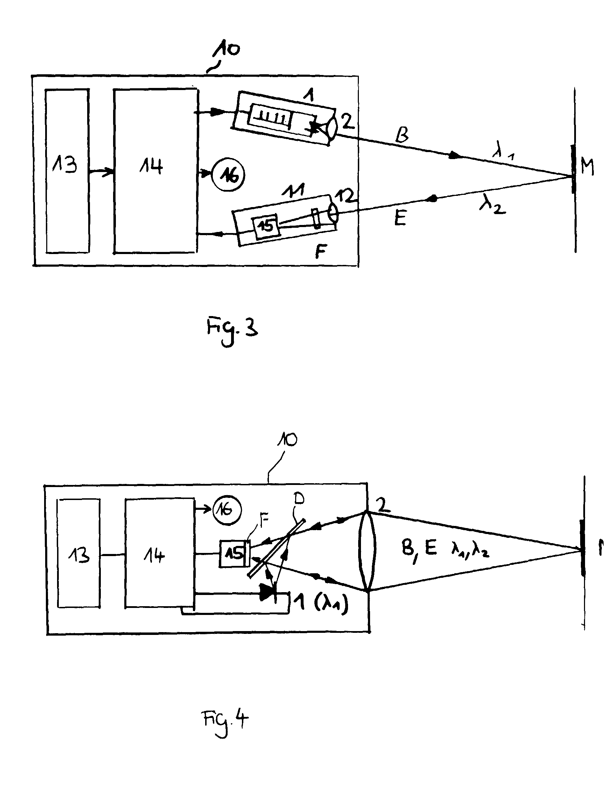

Figure 3 schematically shows a detecting device 10 which includes a pulsed laser 1 and a detection arrangement 11. The laser source 1 and the detection arrangement 11 together form a compact detecting device 10 which can be used as a handheld equipment. A power supply 13 is included; it may be a conventional battery.

The laser 1 emits a laser beam B at a specific wavelength $\lambda_1$. Optics 2 may be provided to focalize the laser beam at a given distance, or, alternatively, to produce a parallel beam, depending on the application.

When the device 10 is directed to a security element comprising an anti-Stokes material M, an emission E having a wavelength $\lambda_2$ (smaller than the excitation wavelength $\lambda_1$) is produced. The emitted light E is collected by the device 10 through optics 12, which, in turn, directs the emitted light to a detector 15. A filter F may optionally be present in the ray path.

The detector 15 is typically a photodiode, an avalanche photodiode (APD), or a photomultiplier tube (PM). Silicon photodiodes or APDs are useful for the wavelength range 200 nm to 1100 nm. Above 1100 nm, germanium or indium-gallium-arsenide photodiodes must be used (up to 2500 nm). PM tubes are available up to 1000 nm. APDs and PM tubes allow in principle for single photon counting; the actual sensitivity depends on the collection range of the optics, and can be very high.

The pulse generator, optics and the detector technologies are known to those skilled in the art and need not to be explained in detail.

In a simple embodiment, the pulse laser is operated such as to produce a continuous sequence of laser pulses (pulse train). This is the preferred option for visual detection only. The pulse laser 1 and the detector 15 may also be operated under the control of a microprocessor 14 (micro-controller), allowing more sensitive optoelectronic detection and more complex signal processing to be performed. In particular, the rise and decay characteristics of the luminescent emission can be determined.

A display 16 may be provided for indicating the result of the authentication of a security element.

The micro-controller 14 may in particular provide an arrangement (program) for the measuring of the rise and decay characteristics of the luminescent emission E. Electronics and programming for measuring such rise and decay characteristics are known to those skilled in the art.

If the collecting optics is sufficiently performing, and if the laser beam B is parallel over a larger distance, the device can be used as a control device over distances of several meters. Authentication of branded goods in a warehouse can then be performed at distance, without the need of putting the detecting device in close contact with every label.

Obviously it is also possible to provide for visual detection in combination with a device as shown in figure 3.

Figure 4 shows an alternative embodiment of a detecting device 10, incorporating a pulsed laser source 1 according to the invention, and a photodetector 15. A common optics 2 is used for the outgoing (B) and the incoming (E) rays; the two rays are separated at a dichroic mirror D, which is reflective for the laser wavelength $\lambda_1$ and transparent for all other wavelengths. The signal received by the photodetector 15, after passage through a optional filter F, is evaluated by a micro-controller circuit 14, which also drives the laser diode 1. A display 16 may be provided for indicating the result of the authentication operation.

**Claims**

1. A method for exciting a luminescent material (M), especially an anti-Stokes material emitting in an up-converting mode, with a light source, characterized in that a light source is used, which comprises at least one pulsed laser (1) emitting pulses having a peak power (PP) sufficient to induce a visible or detectable emission in the luminescent material, preferably having a peak power of more than 1 W, more preferably of about 10 W, wherein the pulse repetition frequency and the width of the pulses are selected in such a way that the mean power (MP) of the laser is sufficiently small, so as not to produce eye hazard, preferably equal or less than 5 mW, more preferably equal or less than 1 mW and even more preferably equal or less than 0,5 mW.

2. A method according to claim 1, wherein the pulsed laser (1) is "Laser Class I" compatible.

3. A method according to one of the claims 1 or 2, wherein the pulse duration (d) of the laser pulses is equal or less than 10 µs, preferably equal or less than 1 µs, more preferably about 100 ns.

4. A method according to claims 1 to 3, wherein the pulse repetition frequency (f) is equal or less than 10 kHz, preferably equal or less than 1 kHz and even more preferably equal or less than 100 Hz.

**5.** A method according to one of the claims 1 to 4, wherein the laser is operated at a wavelength ($\lambda_1$) preferably of about 980 nm and wherein the laser (1) is used to excite an anti-Stokes type material comprising one or more rare-earth ions selected from the group consisting of ytterbium (Yb), erbium (Er), praseodymium (Pr), holmium (Ho) and thulium (Tm).

**6.** A method according to one of the claims 1 to 5, wherein the light source (1) is portable.

**7.** A method according to one of the claims 1 to 6, wherein the light source further comprises optics (2) for directing and/or focussing the laser beam (B) onto the luminescent material (M).

**8.** A method for authenticating a security element (3), in particular a security print, including a luminescent material, in particular an anti-Stokes material, the method comprising the steps of exciting the luminescent material (M) according to one of the claims 1 to 7 and detecting the light (E) emitted by the luminescent material in response to the excitation.

**9.** A method according to claim 8, wherein the emitted light (E) is detected visually.

**10.** A method according to one of the claims 8 or 9, wherein the emitted light (E) is detected optoelectronically.

**11.** A method according to claim 10, wherein the luminescent material (M) is excited by a single laser pulse, or by a relatively small number of laser pulses, preferably less than ten.

**12.** A method according to claim 10 or 11, wherein both the excitation of the luminescent material (M) and the detection of the emission (E) are performed over a certain distance (L) rather than in close contact to the luminescent material, such that the process can be described as remote authentication.

**13.** A method according to one of the claims 10 to 12, wherein, in addition to the intensity and wavelength of the emission (E), the rise and/or decay characteristics of the emission (E) are measured and used for authentication.

**14.** A device (10) for exciting a luminescent material, comprising at least one pulsed laser (1), preferably a "Laser Class I" compatible laser, having a peak power (PP) sufficiently high to induce a visible or detectable emission in a luminescent material upon excitation with said device, preferably having a peak power of at least 1 W, more preferably of about 10 W, wherein the repetition frequency and the width of the pulses are selected such that the mean optical output power (MP) of the laser is sufficiently low so as not to produce eye hazard, in particular equal or less than 5 mW, preferably equal or less than 1 mW, more preferably equal or less than 0,5 mW.

**15.** A device (10) according to claim 14, wherein the laser has a pulse duration (d) of equal or less than 10 µs, preferably equal or less than 1 µs, more preferably about 100 ns.

**16.** A device (10) according to one of the claims 14 to 15, wherein the laser has a pulse repetition frequency of equal or less than 10 kHz, preferably equal or less than 1 kHz and even more preferably equal or less than 100 Hz.

**17.** A device (10) according to one of the claims 14 to 16, wherein the laser has a wavelength of about 980 nm.

**18.** A device (10) according to one of the claims 14 to 17, wherein the laser is portable.

**19.** A device according to one of the claims 14 to 18, wherein the detecting device (10) is provided with optics (2) for focussing or directing the laser beam (B) towards the luminescent material (M).

**20.** A device according to one of the claims 14 to 19, wherein the detecting device (10) further includes an arrangement (11) for optoelectronically detecting the luminescent emission (E).

**21.** A device (10) according to one of the claims 14 to 20, wherein the arrangement for optoelectronically detecting the emission (E) is further adapted to measure the rise and/or decay characteristics of the luminescent emission (E).

Fig 1

Fig. 2

Fig. 3

Fig. 4

EP 1 043 681 A1

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | BRENIER, A. ET AL.: "Excited-state absorption in Tm/sup 3+/ doped LiNbO/sub 3/:Mgo and Gd/sub 3/Ga/sub 5/O/sub 12/ and looping mechanism" JOURNAL OF LUMINESCENCE, vol. 62, no. 3-4, October 1994 (1994-10), pages 147-156, XP002118469 Netherlands * the whole document * | 1-21 | G06K7/12 G06K19/14 |
| D,A | DE 25 47 768 A (ID KORT AB) 15 July 1976 (1976-07-15) * the whole document * | 1-21 | |

TECHNICAL FIELDS SEARCHED (Int.Cl.7)

G06K

The present search report has been drawn up for all claims

| Place of search | Date of completion of the search | Examiner |
|---|---|---|
| THE HAGUE | 12 October 1999 | Goossens, A |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

9

**EP 1 043 681 A1**

This annex lists the patent family members relating to the patent documents cited in the above-mentioned European search report.
The members are as contained in the European Patent Office EDP file on
The European Patent Office is in no way liable for these particulars which are merely given for the purpose of information.

12-10-1999

| Patent document cited in search report | Publication date | Patent family member(s) | | Publication date |
|---|---|---|---|---|
| DE 2547768 A | 15-07-1976 | SE | 399602 B | 20-02-1978 |
| | | BR | 7506964 A | 17-08-1976 |
| | | CA | 1078961 A | 03-06-1980 |
| | | DE | 2559430 A | 26-05-1977 |
| | | FR | 2289976 A | 28-05-1976 |
| | | JP | 1214199 C | 27-06-1984 |
| | | JP | 51088300 A | 02-08-1976 |
| | | JP | 58048948 B | 01-11-1983 |
| | | SE | 7413480 A | 26-04-1976 |
| | | US | 4047033 A | 06-09-1977 |